# FASCICULE DE BREVET EUROPEEN

(11) **EP 1 468 484 B1**
(45) Date de publication et mention de la délivrance du brevet: **20.07.2005**
(21) Numéro de dépôt: 03717348.1
(22) Date de dépôt: 22.01.2003
(51) Int. Cl.: H02M 3/158

(54) **CONVERTISSEUR DE TENSION DC/DC MULTICELLULE A INTERRUPTEURS DE PROTECTION**
MEHRZELLIGER GLEICHSPANNUNGSWANDLER MIT SCHUTZSCHALTERN
MULTICELLULAR DC/DC VOLTAGE CONVERTER WITH PROTECTION SWITCHES

(30) Priorité: 22.01.2002 FR 0200750; 22.01.2002 FR 0200751
(43) Date de publication de la demande: 20.10.2004
(73) Titulaire: JOHNSON CONTROLS AUTOMOTIVE ELECTRONICS, 95520 Osny (FR)
(72) Inventeur: GUILLARME, Nicolas, F-95630 MERIEL (FR); CONDAMIN, Bruno, F-60500 CHANTILLY (FR)
(74) Mandataire: Fruchard, Guy
(86) Numéro de dépôt international: PCT/FR2003/000209
(87) Numéro de publication internationale: WO 2003/063327

(56) Documents cités:
- US-A- 5 808 453
- US-A- 6 160 386
- US-B1- 6 275 958
- US-B1- 6 317 345

## Description

La présente invention concerne un convertisseur de tension continu/continu (DC/DC), et trouve des applications, en particulier, dans le domaine automobile. Un tel convertisseur est divulgué dans le document US 6 275 958 B1.

Elle concerne plus particulièrement un convertisseur de tension DC/DC multicellule, c'est-à-dire comprenant plusieurs cellules formant autant de convertisseurs élémentaires respectifs, disposées en parallèle les unes avec les autres. En particulier, chaque cellule est un convertisseur DC/DC à découpage, qui présente la particularité d'être non isolé.

### ARRIERE-PLAN DE L'INVENTION

Un tel convertisseur à découpage est un dispositif électrique quadripolaire commandé, comprenant une première paire de bornes positive et négative d'une part, et une seconde paire de bornes positive et négative d'autre part. Les première et seconde borne négatives sont reliées ensemble par une première branche de circuit déterminée. De même, les première et seconde bornes positives sont reliées ensemble par une seconde branche de circuit déterminée, qui comprend une inductance formant réservoir d'énergie. Le convertisseur comprend en outre des moyens de découpage comprenant au moins un interrupteur commandé, dont l'ouverture et la fermeture sont commandés par une unité de gestion selon un rapport cyclique déterminé.

Un tel circuit est capable de délivrer un courant électrique continu ou quasi-continu entre les deux premières bornes positive et négative selon une tension déterminée, dite tension de sortie, lorsqu'une tension déterminée, dite tension d'entrée, est appliquée entre les secondes bornes positive et négative, ou réciproquement.

Le convertisseur est dit non isolé en ce sens qu'il comprend lesdites première et seconde branches de circuit reliant lesdites première et seconde bornes, respectivement négatives et positives. Un tel convertisseur s'oppose en effet à un convertisseur à isolement, dans lequel la première paire de bornes est isolée de la seconde paire de bornes.

Afin de réduire la dimension des composants constituants le convertisseur tout en délivrant une puissance suffisante pour alimenter différents équipements, il est connu, notamment du document US-A-6 275 958 de réaliser un convertisseur multicellule comportant une série de cellules montées en parallèle. Lorsqu'une cellule est défectueuse, il est également connu de ce même document d'isoler la cellule défectueuse au moyen de deux interrupteurs de protection formés par des transistors MOS disposés l'un du côté d'un réseau à haute tension et l'autre disposé du côté d'un réseau à basse tension.

Ces transistors fonctionnent comme des interrupteurs commandés qui sont fermés en fonctionnement normal, et qui sont ouverts lorsqu'un dysfonctionnement est détecté.

Il s'ensuit que lors d'un fonctionnement normal les composants dédiés à la fonction de protection sont à l'origine d'une consommation statique de puissance qui, selon les cas, peut varier entre 0,5 % et 2,0 % de la consommation statique de l'ensemble du dispositif.

Par ailleurs, la présence de ces composants de protection se traduit par une augmentation de la taille du dispositif électrique, un allongement et une plus grande complexité du procédé de fabrication, et, en définitive, par une augmentation substantielle du coût du dispositif.

### OBJET DE L'INVENTION

Un but de la présente invention est de proposer un convertisseur de tension multicellule comprenant un mode de fonctionnement dégradé, dans lequel une cellule déterminée peut être neutralisée indépendamment des autres cellules lorsque survient un dysfonctionnement dans cette cellule , tout en minimisant la consommation en fonctionnement normal.

### BREVE DESCRIPTION DE L'INVENTION

Selon l'invention, on propose un convertisseur de tension DC/DC comprenant :
- une première borne positive et une première borne négative destinées à être connectées respectivement à deux bornes d'un réseau électrique à haute tension ;
- une seconde borne positive et une seconde borne négative destinées à être connectées respectivement à deux bornes d'un réseau électrique à basse tension ;
- n cellules connectées en parallèle, où n est un nombre entier strictement supérieur à l'unité, disposées entre lesdites premières bornes positive et négative d'une part et lesdites secondes bornes positive et négative d'autre part, comprenant chacune un convertisseur DC/DC à découpage, ayant chacune une première branche de circuit reliant ladite première borne négative et ladite seconde borne négative, une deuxième branche de circuit comprenant une inductance et reliant ladite première borne positive et ladite seconde borne positive, des moyens de découpage comprenant au moins un interrupteur de découpage, et une unité de gestion adaptée pour commander l'ouverture et la fermeture de l'interrupteur de découpage selon un rapport cyclique déterminé ; dans lequel chaque cellule comporte en outre un transistor de protection unique disposé dans ladite seconde branche de circuit et associé à une unité de gestion de protection pour neutraliser ladite cellule indépendamment des autres cellules.

En effet, contrairement à l'idée reçue du document US-A-6 275 958, il suffit d'un seul transistor de protection pour permettre un isolement de la cellule correspondante et la mise en service de la cellule est obtenue en alimentant ce seul transistor pour le maintenir en position fermée de sorte que la consommation est réduite.

Selon une version avantageuse de l'invention, le transistor de protection unique de chaque cellule est monté dans une partie haute tension du convertisseur. En raison de la haute tension le courant de maintien en position fermée est plus faible de sorte que la consommation est encore minimisée.

On entend par interrupteur fermé, un interrupteur dans un état tel qu'il est passant pour le courant circulant dans la branche de circuit contenant cet interrupteur. A l'inverse, un interrupteur ouvert impose une intensité nulle dans la branche de circuit à laquelle il appartient. Dans le cas où l'interrupteur est réalisé au moyen d'un transistor qui comporte une diode de structure, l'état ouvert de cet interrupteur impose une intensité nulle lorsque la tension aux bornes de l'interrupteur provoque en outre le blocage de la diode de structure, c'est-à-dire lorsque le potentiel électrique de la cathode de cette diode est supérieur au potentiel électrique de l'anode de cette diode.

Selon un autre aspect de l'invention en relation avec un transistor unique par cellule monté dans une partie haute tension du convertisseur, le convertisseur comporte en outre un transistor de protection commun à toutes les cellules associé à une partie basse tension du convertisseur. Ainsi tout en augmentant de façon très minime la consommation statique du convertisseur, on protège celui-ci contre une inversion de polarité dans le réseau basse tension, en particulier lors d'un montage inversé d'une batterie basse tension.

### BREVE DESCRIPTION DES DESSINS

D'autres particularités et avantages de la présente invention apparaîtront dans la description ci-après d'exemples de réalisation non limitatifs, en référence aux dessins annexés, dans lesquels :
- la figure 1 est un schéma électrique d'un mode de réalisation d'un convertisseur abaisseur de tension selon la présente invention ;
- la figure 2 représente l'agencement d'un contrôleur et d'un détecteur de dysfonctionnement associés au convertisseur de la figure 1 ;
- la figure 3 est un schéma électrique d'un mode de réalisation d'un convertisseur élévateur de tension selon la présente invention ;
- la figure 4 est un schéma électrique d'un premier mode de réalisation d'un convertisseur abaisseur/élévateur de tension selon la présente invention ;
- la figure 5 représente l'agencement d'un contrôleur et d'un détecteur de dysfonctionnement associés au convertisseur de la figure 4 ;
- la figure 6 est un schéma électrique d'un second mode de réalisation d'un convertisseur abaisseur/élévateur de tension selon la présente invention ;
- la figure 7 représente l'agencement d'un contrôleur et d'un détecteur de dysfonctionnement associés au convertisseur de la figure 6,
- la figure 8 est un schéma électrique d'un dispositif comprenant une protection commune du côté basse tension.

### DESCRIPTION DETAILLEE DE L'INVENTION

Sur ces figures, afin de bien indiquer l'orientation des transistors utilisés, des lettres D et S désignent respectivement le drain et la source de chaque transistor, conformément à l'orientation spécifiée dans la description pour ce transistor.

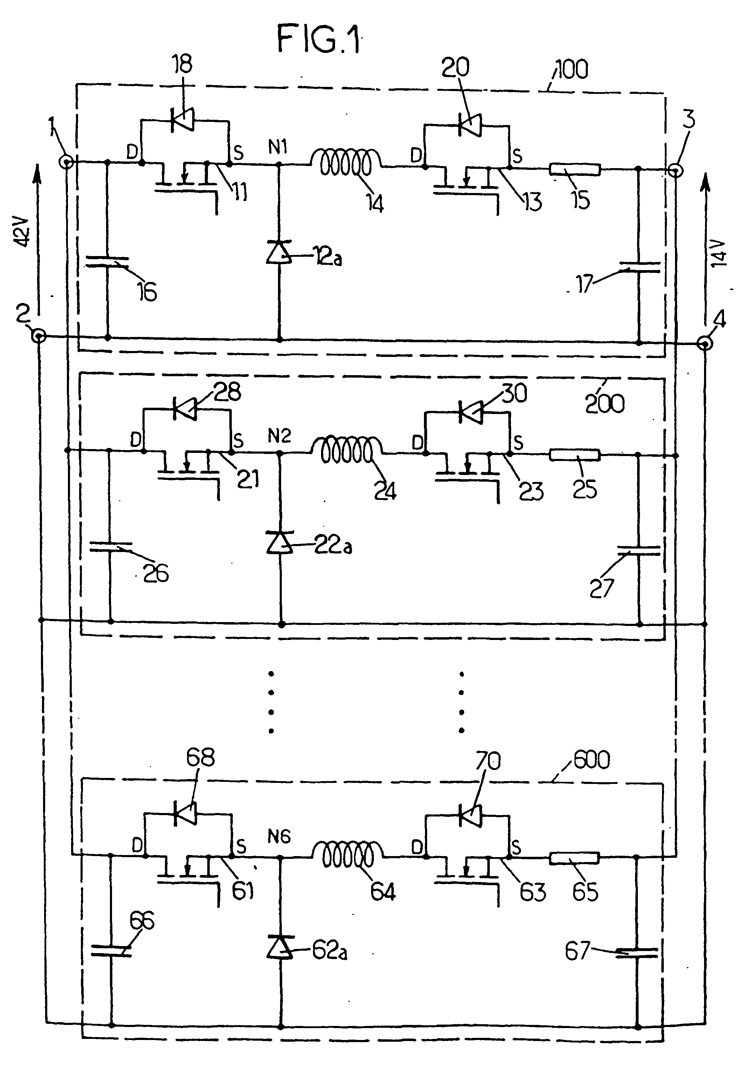

Selon le schéma de la figure 1, un réseau à courant continu et à haute tension est connecté à un convertisseur abaisseur de tension par la borne positive 1 et par la borne négative 2. La tension entre les bornes 1 et 2 est par exemple située autour de 42 volts. Un réseau à courant continu et à basse tension est connecté aux bornes 3 et 4, la borne 3 étant positive et la borne 4 étant négative, et la tension entre ces deux bornes étant par exemple située autour de 14 volts.

Dans l'exemple illustré par la figure 1, six convertisseurs élémentaires à découpage 100, 200,..., 600, de type abaisseur de tension, identiques entre eux, sont disposés en parallèle entre, d'un côté, les bornes 1 et 2, et de l'autre côté, les bornes 3 et 4. Les bornes 2 et 4 sont directement reliées entre elles.

Dans chacun de ces convertisseurs élémentaires 100, 200,..., 600, un condensateur 16, 26,..., 66, par exemple de 30 microfarads, relie les bornes 1 et 2 afin de stocker, du côté du réseau à 42 volts, les charges électriques transférées par ce convertisseur élémentaire 100, 200,..., 600. De même, dans chaque convertisseur élémentaire 100, 200,.... 600, un autre condensateur 17, 27,...,67, par exemple aussi de 30 microfarads, relie les bornes 3 et 4 afin de stocker, du côté du réseau à 14 volts, les charges électriques transférées par ce convertisseur élémentaire 100, 200,..., 600. Chacun des deux réseaux à 42 volts et à 14 volts, lors de son fonctionnement, consomme partiellement les charges électriques des ensembles respectifs de condensateurs 16, 26,..., 66 et 17, 27,...,67.

Dans chaque convertisseur élémentaire 100, 200,..., 600, les bornes 1 et 3 sont reliées entre elles par une branche comprenant les composants suivants, montés en série, dans l'ordre suivant considéré de la borne 1 vers la borne 3 :
- un transistor abaisseur 11, 21,..., 61, par exemple MOS-FET à canal n (N-MOS), connecté par son drain à la borne 1. Un tel transistor comporte une diode de structure 18, 28,..., 68 placée en parallèle avec l'interrupteur constitué par le transistor abaisseur 11, 21,..., 61, et orientée dans le sens passant de la borne 3 vers la borne 1 ;
- une inductance 14, 24,..., 64, par exemple de 12 microhenry et de résistance 6 milliohms, reliée à la source' du transistor abaisseur 11, 21,..., 61 par un noeud N1, N2,..., N6 ;
- un transistor de protection 13, 23,..., 63, unique pour chaque cellule par exemple aussi MOS-FET à canal n (N-MOS). Ce transistor 13, 23,..., 63 est connecté par son drain à l'inductance 14, 24,..., 64. De la même façon que pour le transistor abaisseur 11, 21,..., 61, ce transistor de protection 13, 23,..., 63 comporte une diode de structure 20, 30,..., 70 placée en parallèle à ce transistor de protection 13, 23,..., 63, et orientée dans le sens passant de la borne 3 vers la borne 1 ;
- une résistance 15, 25,..., 65, par exemple de 2 milliohms, reliée à la source du transistor 13, 23,..., 63 et à la borne 3.

En cas de court-circuit accidentel entre la source et le drain du transistor abaisseur 11, 21,..., 61, la diode équivalente 20, 30,..., 70 du transistor de protection 13, 23,..., 63 empêche la circulation d'un courant involontaire de la borne 1 vers la borne 3, lorsque ce transistor de protection 13, 23,..., 63 est alors commandé pour être ouvert. Un tel courant involontaire provoquerait en effet la décharge du circuit à haute tension dans le circuit à basse tension.

Chaque convertisseur élémentaire abaisseur de tension 100, 200,..., 600 comporte encore une diode 12a, 22a,..., 62a relié par sa cathode au noeud N1, N2,..., N6 et par son anode aux bornes 2 et 4.

Chacun des convertisseurs abaisseur de tension élémentaires 100, 200,..., 600 ainsi constitué peut transférer approximativement une puissance de 250 watts du réseau à 42 volts vers le réseau à 14 volts.

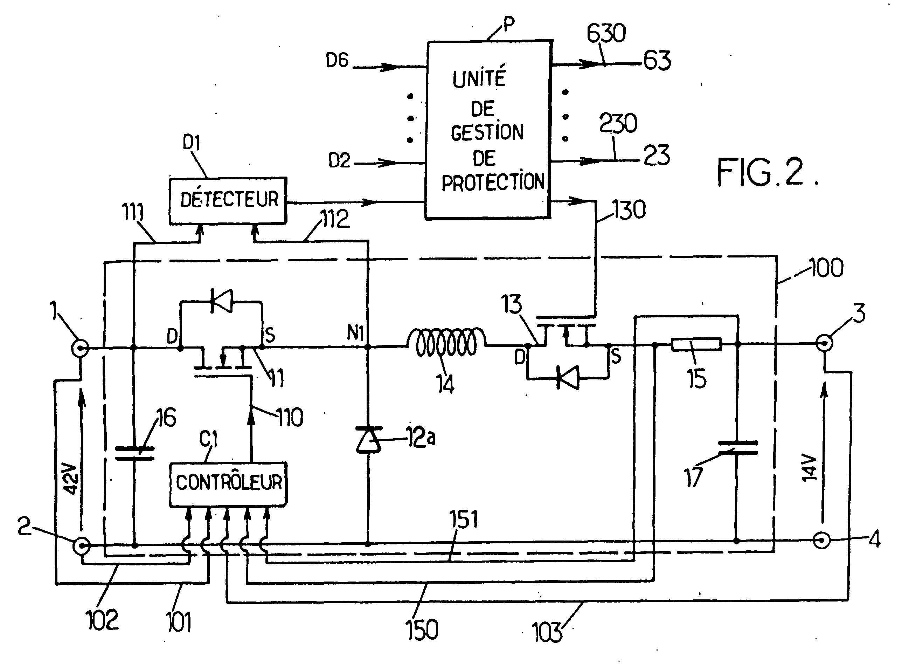

La figure 2 représente l'architecture de contrôle du convertisseur élémentaire 100 de la figure 1. Il comprend un contrôleur C1 recevant sur ses entrées ladite haute tension par les fils 101 et 102 connectés respectivement aux bornes 1 et 2, ladite basse tension par le fil 103 connecté à la borne 3 et la tension aux bornes de la résistance 15 par les fils 150 et 151. Selon un mode de commande à modulation de largeur d'impulsions connu de l'homme du métier, le contrôleur C1 commande le transistor abaisseur 11 par des signaux d'ouverture ou de fermeture transmis à sa grille par le fil 110, selon une périodicité d'impulsions déterminée, correspondant par exemple à une fréquence de 70 kilohertz.

Un contrôleur analogue au contrôleur C1 est disposé de la même façon dans chacun des cinq autres convertisseurs élémentaires 200,..., 600 pour remplir une fonction identique vis-à-vis de chacun de ces circuits. Avantageusement, les six contrôleurs émettent des impulsions respectives selon la même périodicité d'impulsions, et sont considérés selon un ordre cyclique déterminé, de telle façon que des impulsions de deux convertisseurs élémentaires successifs selon ledit ordre sont décalées d'un délai égal au sixième de la période des impulsions de commande de chaque convertisseur élémentaire.

Pour le convertisseur élémentaire 100, un détecteur D1 reçoit sur deux de ses entrées la tension entre le drain et la source du transistor abaisseur 11 par les deux fils 111 et 112. En fonctionnement normal du convertisseur élémentaire 100, le détecteur D1 transmet un signal à une unité de gestion de protection P de sorte que cette dernière applique par le fil 130 une certaine tension à la grille du transistor de protection 13, par exemple une tension comprise entre 5 et 10 volts par rapport à la source de ce transistor de protection 13, de façon à maintenir le transistor de protection 13 dans un état fermé, ou passant.

Lorsque le détecteur D1 identifie un dysfonctionnement du transistor abaisseur 11, et notamment un court-circuit entre le drain et la source de ce transistor abaisseur 11, le détecteur D1 interrompt la tension appliquée sur la grille du transistor de protection 13 par le fil 130, de façon à ouvrir le circuit entre le drain et la source de ce transistor de protection 13. Cette ouverture de circuit peut être obtenue par une résistance de polarisation, non représentée et par exemple de 10 kiloohms, reliant la grille et la source du transistor de protection 13. Ainsi, l'ensemble du convertisseur élémentaire 100 est neutralisé. De plus, un éventuel courant de décharge du réseau à 42 volts vers le réseau à 14 volts, par le convertisseur élémentaire 100, ne peut pas circuler de la borne 1 vers la borne 3.

Les autres convertisseurs élémentaires 200,..., 600 comportent aussi chacun un détecteur respectif D2,..., D6 identique au détecteur D1, et relié de façon analogue à l'unité de gestion de protection P. Cette dernière est aussi reliée par des fils 230,..., 630 aux transistors abaisseurs respectifs 23,..., 63 des convertisseurs élémentaires 200,..., 600, de façon à apporter un mécanisme de protection individuelle identique à tous les convertisseurs élémentaires 100, 200,..., 600.

Chaque convertisseur élémentaire 100, 200,..., 600 étant disposé en parallèle avec les autres convertisseurs élémentaires, l'arrêt du fonctionnement de l'un d'entre eux n'interrompt pas le fonctionnement des autres. Un fonctionnement du convertisseur global est donc poursuivi au moyen des convertisseurs élémentaires encore opérationnels. Cette poursuite de fonctionnement est permise grâce à la disposition en parallèle des convertisseurs élémentaires, ainsi que par la disposition, selon la présente invention, d'un interrupteur de protection dans chaque convertisseur élémentaire.

Eventuellement, le mode de commande de l'ensemble des convertisseurs élémentaires 100, 200,..., 600 par leurs contrôleurs respectifs peut être adapté par un contrôleur superviseur non représenté relié aux six contrôleurs et aux six détecteurs, de façon à tenir compte de la neutralisation de l'un des convertisseurs élémentaires. Ceci permet, dans cette circonstance, d'optimiser le fonctionnement du convertisseur global malgré l'arrêt de l'un des convertisseurs élémentaires.

Par exemple, lorsqu'un convertisseur élémentaire 100, 200,..., 600 est neutralisé, le contrôleur superviseur commande les contrôleurs des cinq autres convertisseurs élémentaires 100, 200,..., 600 encore opérationnels pour que les impulsions de commande de deux convertisseurs élémentaires successifs soient décalées d'un délai égal au cinquième de la période commune des impulsions de commande de chaque convertisseur élémentaire. Le fonctionnement dégradé ainsi obtenu pour le convertisseur global, suite à la neutralisation de l'un des convertisseurs élémentaires, correspond à une réduction du débit de charge électrique maximal, ou bien de la puissance électrique maximale, pouvant être transféré entre le réseau à haute tension et le réseau à basse tension.

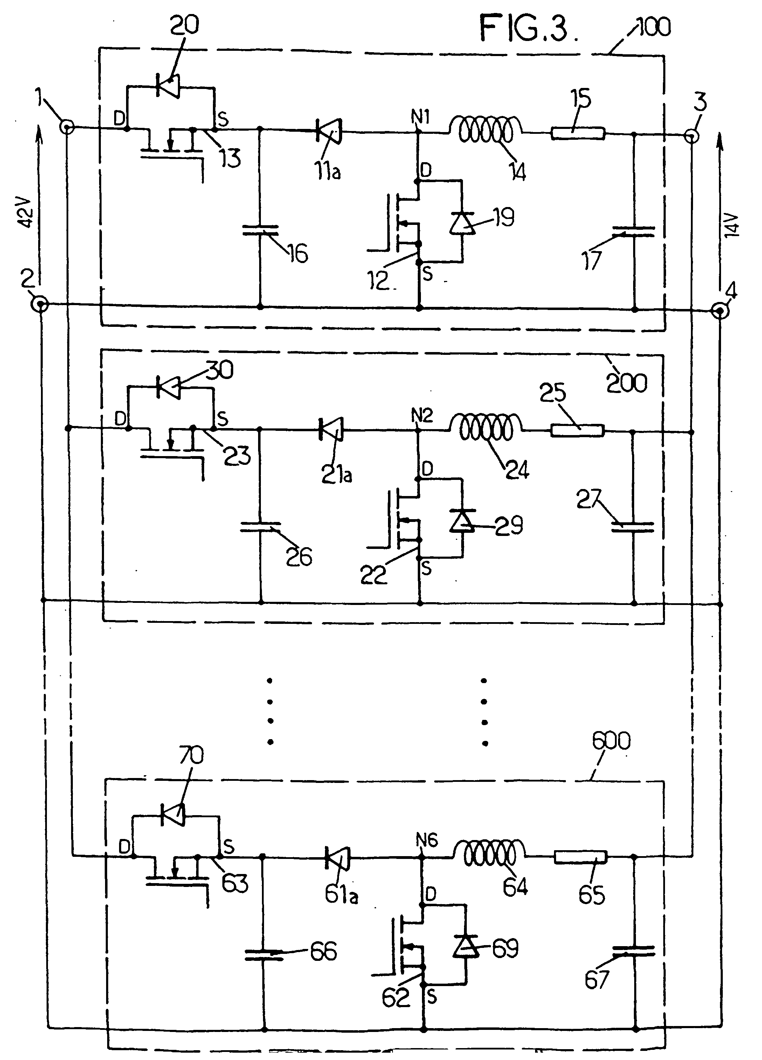

La figure 3 correspond à un mode de réalisation de l'invention qui consiste en un convertisseur élévateur de tension. Ce mode de réalisation reprend l'architecture et une partie des composants du mode de réalisation précédent. La description détaillée n'est pas reprise dans son intégralité, et tous les composants et références non repris sont identiques à ceux et celles présentés dans le mode de réalisation précédent.

Dans ce mode de réalisation, le transistor unique de protection 12, 23, ...., 63 est monté dans la partie haute tension de la cellule.

Chaque convertisseur élémentaire 100, 200,..., 600 est maintenant un convertisseur élévateur de tension, qui comprend :
- un transistor 13, 23,..., 63, par exemple MOS-FET à canal n (N-MOS), remplissant la fonction d'interrupteur de protection, connecté par son drain à la borne 1. Il comporte une diode de structure 20, 30,..., 70 placée en parallèle à ce transistor de protection 13, 23,..., 63, et orientée dans le sens passant en direction de la borne 1. Sa source est par ailleurs reliée au condensateur 16, 26,..., 66 ;
- une diode 11a, 21a,..., 61 a connectée par sa cathode à la source du transistor de protection 13, 23,..., 63 ;
- une inductance 14, 24,..., 64, par exemple de 12 microhenry et de résistance 6 milliohms, reliée à l'anode de la diode 11a, 21a,..., 61a par un noeud N1, N2,..., N6 ;
- une résistance 15, 25,..., 65, par exemple de 2 milliohms reliée à l'inductance 14, 24,..., 64 et à la borne 3.

En lieu et place des diodes 12a, 22a,..., 62a, chaque convertisseur élémentaire 100, 200,..., 600 comporte un transistor élévateur 12, 22,..., 62. Ce transistor élévateur 12, 22,..., 62, par exemple encore MOS-FET à canal n (N-MOS), est relié par son drain au noeud N1, N2,..., N6 et par sa source aux bornes 2 et 4. Ce transistor élévateur 12, 22,..., 62 comporte aussi une diode de structure 19, 29,..., 69 disposée en parallèle et orientée dans le sens passant vers le noeud N1, N2,..., N6.

Le mode de fonctionnement d'un tel convertisseur élévateur de tension est connu de l'homme du métier, et utilise un mode de commande des transistors élévateurs 12, 22,..., 62 analogue à celui utilisé dans le mode de réalisation précédent pour les transistors abaisseurs. Chacun des convertisseurs élévateurs de tension élémentaires 100, 200,..., 600 ainsi constitué peut transférer approximativement une puissance de 250 watts du réseau à 14 volts vers le réseau à 42 volts.

Avantageusement, pour un convertisseur élévateur de tension correspondant à la figure 3, des détecteurs de dysfonctionnement D1, D2,..., D6 sont chacun reliés par deux entrées au drain et à la source du transistor élévateur 12, 22,..., 62 du convertisseur élémentaire auquel il est associé. Ces détecteurs de dysfonctionnement D1, D2,..., D6 participent de la même façon que précédemment à l'ouverture du transistor de protection 13, 23,..., 63 du convertisseur élémentaire dans lequel un dysfonctionnement est détecté.

Les mêmes avantages et perfectionnements que ceux cités dans le cas d'un convertisseur abaisseur de tension peuvent être repris à l'identique dans le cas présent d'un convertisseur élévateur de tension.

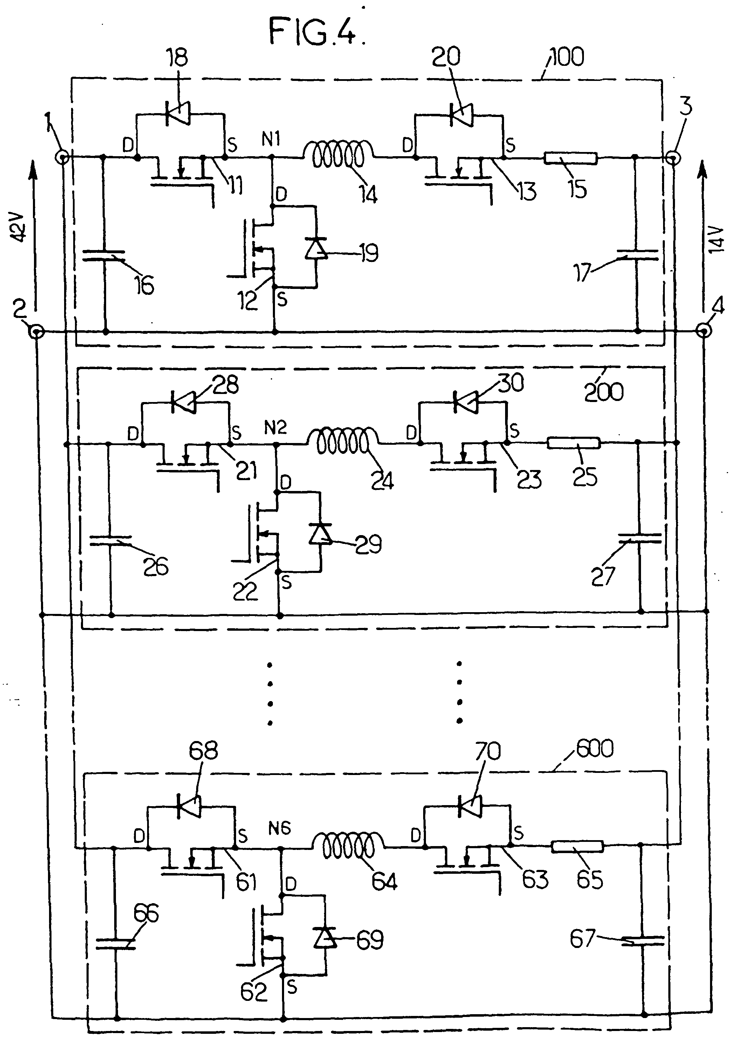

La figure 4 correspond à un convertisseur composé de convertisseurs élémentaires 100, 200,..., 600 réversibles. Chacun des convertisseurs élémentaires 100, 200,..., 600 réversibles reprend des composants des convertisseurs à découpage abaisseurs ou élévateurs de tension déjà présentés, et disposés de façon analogue. La description détaillée de ces composants n'est pas reprise ici.

Chaque convertisseur élémentaire 100, 200,..., 600 réversible comprend un transistor abaisseur 11, 21,..., 61 et un transistor élévateur 12, 22,..., 62 en lieu et place respective des diodes 11a, 21a,..., 61a et 12a, 22a,..., 62a.

Le transistor abaisseur 11, 21,..., 61, par exemple MOS-FET à canal n (N-MOS), est connecté par son drain à la borne 1 et par sa source au noeud N1, N2,..., N6. Sa diode de structure 18, 28,..., 68, placée en parallèle à ce transistor abaisseur 11, 21,..., 61, est orientée dans le sens passant de la borne 3 vers la borne 1.

Le transistor élévateur 12, 22,..., 62, par exemple encore MOS-FET à canal n (N-MOS), est relié par son drain au noeud N1, N2,..., N6 et par sa source aux bornes 2 et 4. Sa diode de structure 19, 29,..., 69 disposée en parallèle est orientée dans le sens passant en direction du noeud N1, N2,..., N6.

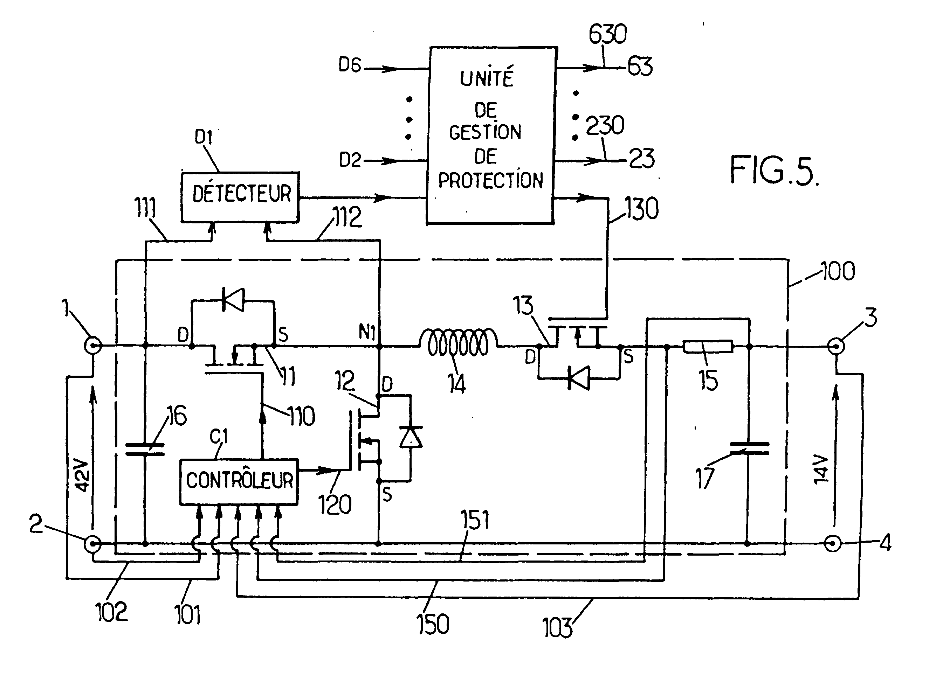

Comme représenté sur la figure 5 pour le convertisseur élémentaire réversible 100, le contrôleur C1 possède deux sorties 110 et 120 reliées respectivement à la grille du transistor abaisseur 11, 21,..., 61 et à celle du transistor élévateur 12, 22,..., 62 de ce convertisseur élémentaire 100. Il possède aussi deux entrées reliées par les fils 150 et 151 aux deux bornes de la résistance shunt 15.

Selon un mode de commande connu de l'homme du métier, le contrôleur C1 commande, dans un mode de fonctionnement en abaisseur de tension la grille du transistor abaisseur 11, 21,..., 61 pour ouvrir ou fermer alternativement celui-ci en fonction de la valeur du courant mesuré dans la résistance shunt 15. Il commande simultanément la grille du transistor élévateur 12, 22,..., 62 pour que celui-ci soit ouvert au moins pendant les intervalles de temps pendant lesquels le transistor abaisseur 11, 21,..., 61 est fermé.

De façon symétrique, dans un mode de fonctionnement en élévateur de tension, le contrôleur C1 commande la grille du transistor élévateur 12, 22,..., 62 pour ouvrir ou fermer alternativement celui-ci en fonction de la valeur du courant mesuré dans la résistance shunt 15. Il commande alors simultanément la grille du transistor abaisseur 11, 21,..., 61 pour que celui-ci soit ouvert au moins pendant les intervalles de temps pendant lesquels le transistor élévateur 12, 22,..., 62 est fermé.

De la même façon, chaque convertisseur élémentaire réversible 100, 200,.., 600 comporte un système de commande des transistors abaisseur 11, 21,..., 61 et élévateur 12, 22,..., 62 qu'il comprend identique à celui du convertisseur élémentaire réversible 100. La synchronisation des commandes de tous les convertisseurs élémentaires réversibles est identique à celle des convertisseurs abaisseurs ou élévateurs déjà décrite dans les modes de réalisation précédents.

Selon la figure 4, le transistor de protection 13, 23,..., 63 de chaque convertisseur réversible élémentaire 100, 200,..., 600 est disposé entre l'inductance 14, 24,..., 64 et la résistance shunt 15, 25,..., 65, son drain étant connecté à l'inductance, sa source à la résistance, et sa diode de structure 20 orientée de la borne 3 vers la borne 1. Ces transistors de protection 13, 23,..., 63 ainsi disposés sont commandés par l'unité de gestion de protection P (voir figure 5), elle-même associée aux détecteurs de dysfonctionnement D1, D2,..., D6. Ces détecteurs D1, D2,..., D6 sont respectivement reliés à la source et au drain des transistors abaisseurs 11, 21,..., 61 de chaque convertisseur élémentaire 100, 200...., 600. La protection obtenue est alors identique à celle du premier mode de réalisation, correspondant aux figures 1 et 2.

Les mêmes avantages et perfectionnements que ceux cités dans le cas d'un convertisseur abaisseur de tension peuvent encore être repris dans le cas présent d'un convertisseur réversible.

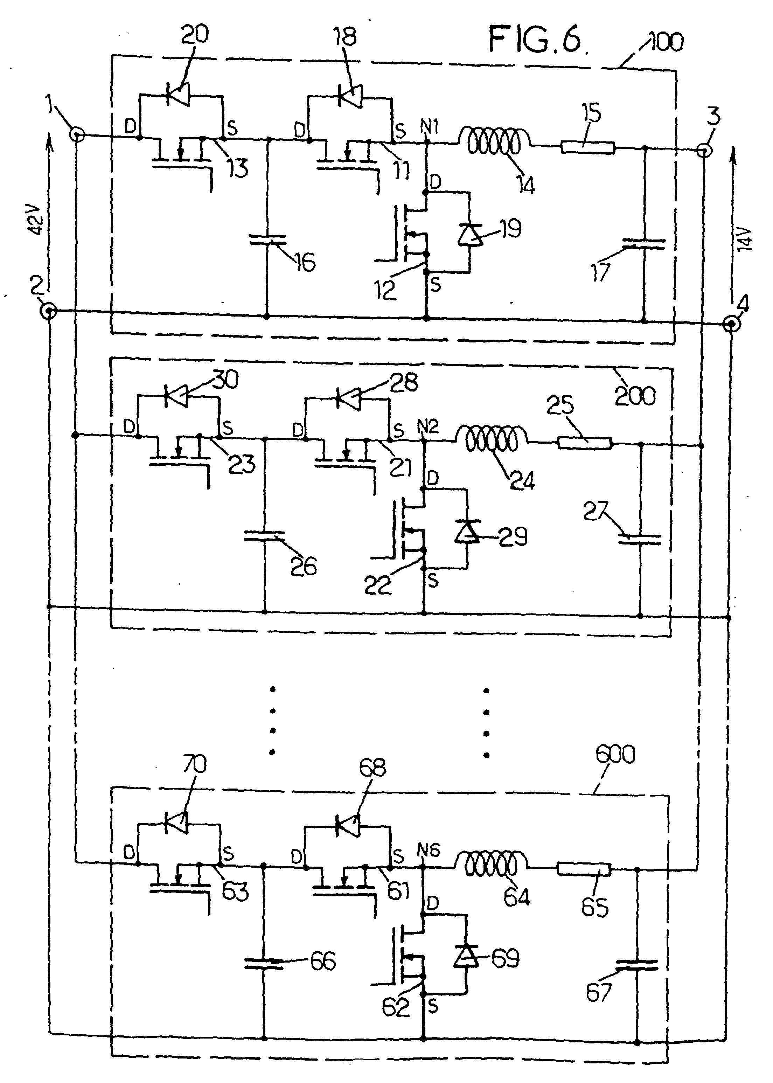

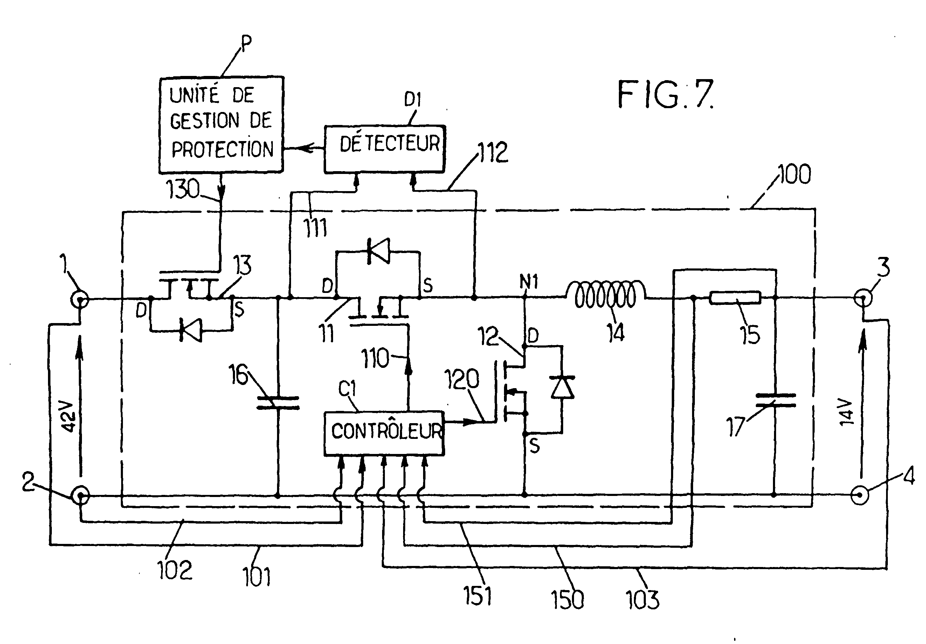

Les figures 6 et 7, associées entre elles, correspondent à un convertisseur réversible de structure identique à celle du convertisseur réversible représenté sur les figures 4 et 5. Dans ce nouveau mode de réalisation de l'invention, le transistor de protection 13, 23,..., 63 de chaque convertisseur réversible élémentaire 100, 200,..., 600 est disposé entre la borne 1 et le transistor abaisseur 11, 21,..., 61. Son drain est connecté à la borne 1, et sa source à un noeud intermédiaire entre le drain du transistor abaisseur 11, 21,..., 61 et le condensateur 16, 26,.., 66. La diode de structure 20, 30,..., 70 du transistor de protection 13, 23,..., 63 est encore orientée pour être passante en direction de la borne 1.

Cette position du transistor de protection 13, 23,..., 63 est préférée à une position située entre le transistor abaisseur 11, 21,..., 61 et un noeud de connexion du condensateur 16, 26,..., 66 à la borne 1. En effet, le courant circulant dans la boucle formée par le condensateur 16, 26,..., 66, le transistor abaisseur 11, 21,..., 61 et le transistor élévateur 12, 22,..., 62 étant un courant haché à variations brutales, il est particulièrement avantageux de réduire la dimension physique cette boucle afin de diminuer les perturbations dues à une éventuelle auto-inductance parasite de cette boucle, ou encore dues à un éventuel rayonnement émis par cette boucle.

Le détecteur D1 reçoit encore sur ses deux entrées la tension entre le drain et la source du transistor abaisseur 11 par les deux fils 111 et 112. Une disposition identique de ces composants est reprise pour chacun des convertisseurs élémentaires réversibles 100, 200,..., 600.

Le fonctionnement du convertisseur global réversible selon ce mode de réalisation, ainsi que le fonctionnement de son système de protection, sont identiques à ceux correspondant aux figures 4 et 5. De la même façon, le détecteur associé à chaque transistor abaisseur 11, 21,..., 61 permet de neutraliser le convertisseur élémentaire 100, 200,..., 600 auquel il est associé en cas de court-circuit survenant au niveau de ce transistor abaisseur. Les mêmes perfectionnements peuvent encore être combinés à ce mode de réalisation.

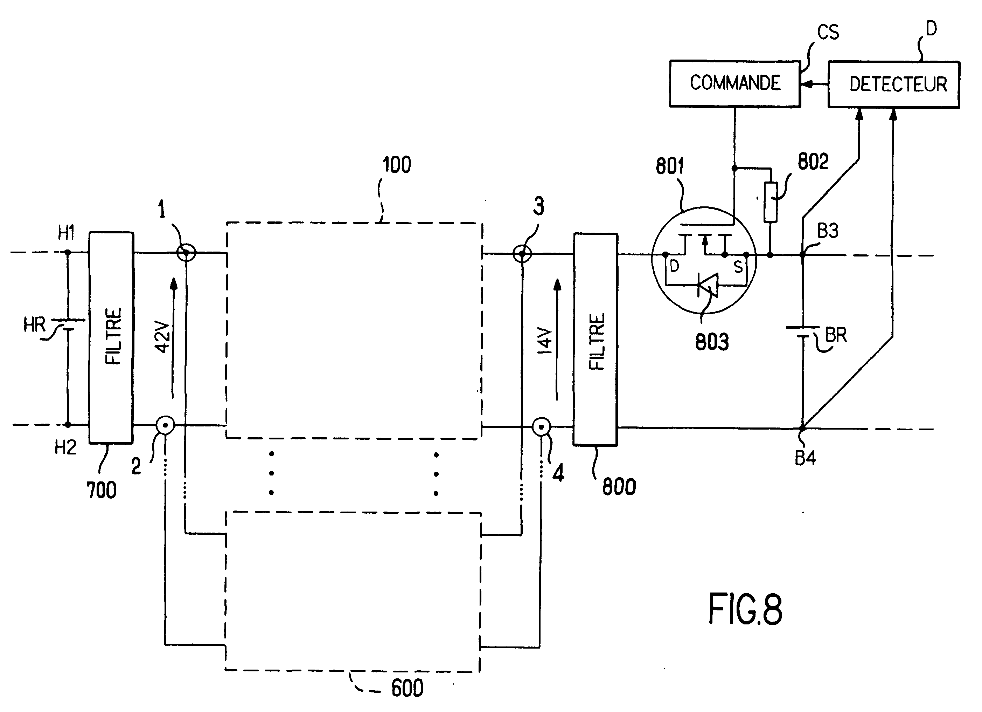

La figure 8 illustre un dispositif qui est en outre équipé d'un transistor de protection commun à toutes les cellules, du côté basse tension.

Sur cette figure, les cellules 100... 600 ont seulement été représentées selon un trait tireté, la structure individuelle des cellules pouvant être l'une quelconque de celles décrites ci-dessus, avec incorporation de transistor de protection unique de chaque cellule du côté haute tension.

Selon le schéma de la figure 8, un réseau à courant continu à haute tension, ayant par exemple une tension de 42 volts environ entre des bornes H1 et H2, comprend une batterie HR disposée entre ces bornes. H1 est une borne positive, H2 est une borne négative.

Un réseau à courant continu à basse tension, par exemple de 14 volts environ entre deux bornes B3 et B4 de ce réseau B, comprend une batterie BR. La batterie BR est connecté entre les bornes B3 et B4. B3 est une borne positive et B4 est une borne négative.

Le réseau à basse tension est connecté par l'intermédiaire d'un filtre 800 aux cellules 100, ... 600. Le filtre 800 est relié aux bornes 3 et 4 communes aux cellules 100, ..., 600. La constitution du filtre 800, connue de l'homme du métier, n'est pas détaillée ici.

Par ailleurs, le réseau à haute tension est aussi connecté aux cellules par l'intermédiaire d'un autre filtre 700 relié aux bornes 1 et 2 d'une part et à des bornes H1, H2 du réseau haute tension entre lesquelles est branchée une batterie haute tension HR.

Un transistor de protection 801, encore à effet de champ du type métal-oxyde-semiconducteur (MOS-FET) à canal n (N-MOS) est disposé entre le filtre 800 et la borne B3. Le drain de ce transistor de protection 801 est relié au filtre 800 tandis que sa source est reliée à la borne B3.

Une unité de commande CS possède une sortie reliée à la grille du transistor de protection 801, et une entrée reliée à une sortie d'un détecteur D. Ce détecteur D est relié par ailleurs aux bornes B3 et B4.

En mode de fonctionnement normal, le détecteur D détecte une tension de l'ordre de 14 volts entre les bornes B3 et B4. L'unité de commande CS commande alors la fermeture du transistor de sécurité 801 par application d'une tension positive à sa grille, de l'ordre de 5 à 10 volts par exemple par rapport à sa source.

Lorsque le détecteur D décèle des valeurs anormales des tensions B3 et B4, par exemple une inversion de polarité, le circuit de commande CS interrompt la tension positive appliquée à la grille du transistor de protection 801. Une résistance 802, par exemple de 10 kiloohms, disposée entre la grille et la source du transistor de protection 801, assure alors l'ouverture de ce transistor. Ainsi, lors d'un court-circuit ou d'une inversion de polarité entre les bornes B3 et B4 du circuit à basse tension B, le circuit basse tension et le convertisseur sont isolés l'un de l'autre.

Le transistor de protection 801, lorsqu'il est à effet de champ de type métal-oxyde-semiconducteur à canal n (N-MOS), possède une diode de structure 803 extérieure disposée en parallèle entre le drain et la source de ce transistor. Cette diode de structure 803 est passante dans le sens allant de la source vers le drain du transistor 801, avec une tension de seuil de l'ordre de 0,9 volt à 1,3 volt. Le transistor de protection 801 est orienté de façon que la diode de structure 803 soit passante en direction du filtre 800.

Bien entendu, l'invention n'est pas limitée au mode de réalisation décrit et on peut y apporter des variantes de réalisation sans sortir du cadre de l'invention tel que défini par les revendications.

En particulier, bien que l'invention ait été décrite selon un mode de réalisation préféré consistant à disposer le transistor de protection unique de chaque cellule du côté haute tension et l'interrupteur commun côté basse tension, ce qui permet d'isoler une cellule et de protéger le convertisseur contre une inversion de polarité côté basse tension tout en ayant une consommation statique minimale, on peut disposer les transistors de protection dans chaque cellule du côté basse tension et l'interrupteur commun côté haute tension. Au prix d'une légère augmentation de la consommation statique cela permet d'éviter un transfert de charge de la batterie basse tension vers la batterie haute tension lorsque la batterie haute tension est déchargée.

Dans des réalisations alternatives des modes de réalisation décrits, les transistors de type N-MOS peuvent être remplacés par des transistors homologues de type P-MOS. Ils peuvent aussi être remplacés par des transistors de technologie bipolaire, sans que la fonction et le fonctionnement général du montage soient changés. Le transistor de protection qui est commun à toutes les cellules peut également être remplacé par un interrupteur commandé par un relais électromagnétique.

De plus, bien que le transistor de protection 801 commun aux différentes cellules du côté basse tension ait été illustré de façon intégrée au convertisseur, il peut être déporté par rapport à celui-ci.

A l'inverse, bien que l'unité de commande CS du transistor 801 ait été illustrée séparée de l'unité de gestion de protection P, elle peut être incorporée à celle-ci.

## Revendications

1. Convertisseur de tension DC/DC comprenant :
- une première borne positive (1) et une première borne négative (2) destinées à être connectées respectivement à deux bornes d'un réseau électrique à haute tension ;
- une seconde borne positive (3) et une seconde borne négative (4) destinées à être connectées respectivement à deux bornes d'un réseau électrique à basse tension ;
- n cellules (100, 200,..., 600) connectées en parallèle, où n est un nombre entier strictement supérieur à l'unité, disposées entre lesdites premières bornes positive (1) et négative (2) d'une part et lesdites secondes bornes positive (3) et négative (4) d'autre part, comprenant chacune un convertisseur DC/DC à découpage, ayant chacune une première branche de circuit reliant ladite première borne négative (2) et ladite seconde borne négative (4), une deuxième branche de circuit comprenant une inductance (14, 24,..., 64) et reliant ladite première borne positive (1) et ladite seconde borne positive (3), des moyens de découpage comprenant au moins un interrupteur de découpage (11), et une unité de gestion (C1) adaptée pour commander l'ouverture et la fermeture de l'interrupteur de découpage (11) selon un rapport cyclique déterminé ;
dans lequel chaque cellule comporte en outre un transistor de protection unique (13, 23,..., 63) disposé dans ladite seconde branche de circuit et associé à une unité de gestion de protection (P) pour neutraliser ladite cellule (100, 200,..., 600) indépendamment des autres cellules.

2. Convertisseur selon la revendication 1, dans lequel le transistor de protection (13, 23,..., 63) de chaque cellule (100, 200,..., 600) est un transistor MOS disposé en série dans ladite seconde branche de circuit de la cellule, entre l'inductance (14, 24,..., 64) et ladite seconde borne positive (3), et comprenant une diode de structure (20, 30,..., 70) connectée à l'inductance (14, 24,..., 64) par sa cathode et à ladite seconde borne positive (3) par son anode.

3. Convertisseur selon la revendication 1, **caractérisé en ce qu'**il comporte un interrupteur de protection (801) qui est commun à toutes les cellules, et qui est associé à une partie du convertisseur opposée au transistor de protection unique de chaque cellule.

4. Convertisseur selon la revendication 1, **caractérisé en ce que** le transistor de protection unique (13, 23,..., 63) de chaque cellule est monté dans une partie haute tension de la cellule.

5. Convertisseur selon la revendication 4, dans lequel l'interrupteur de protection (13, 23,..., 63) est un transistor MOS disposé en série dans ladite seconde branche de circuit de façon immédiatement adjacente à ladite première borne positive (1), et ayant une diode de structure (20, 30,..., 70) reliée à ladite première borne positive (1) par sa cathode.

6. Convertisseur selon la revendication 4, **caractérisé en ce qu'**il comporte un interrupteur de protection (801) qui est commun à toutes les cellules et qui est associé à une partie basse tension du convertisseur.

## Patentansprüche

1. Gleichspannungswandler, der aufweist:
- eine erste positive Anschlussklemme (1) und eine erste negative Anschlussklemme (2), die dazu bestimmt sind, mit zwei Anschlussklemmen eines elektrischen Hochspannungsnetzes verbunden zu werden;
- eine zweite positive Anschlussklemme (3) und eine zweite negative Anschlussklemme (4), die dazu bestimmt sind, mit zwei Anschlussklemmen eines elektrischen Niederspannungsnetzes verbunden zu werden;
- n paralielgeschaltete Zellen (100, 200, ..., 600), mit n einer ganzen Zahl unbedingt größer als Eins, die zwischen der ersten positiven Anschlussklemme (1) und der ersten negativen Anschlussklemme (2) einerseits und der zweiten positiven Anschlussklemme (3) und der zweiten negativen Anschlussklemme (4) andererseits angeordnet sind und je einen getakteten DC/DC-Wandler aufweisen, mit einem ersten Schaltungszweig, der die erste negative Anschlussklemme (2) und die zweite negative Anschlussklemme (4) verbindet, und einem zweiten Schaltungszweig, der eine Induktanz (14, 24, ..., 64) aufweist und die erste positive Anschlussklemme (1) und die zweite positive Anschlussklemme (3) verbindet, mit Zerhackermitteln, die mindestens einen Zerhacker-Unterbrecher (11) aufweisen, und mit einer Verwaltungseinheit (C1), die ausgelegt ist, um das Öffnen und das Schließen des Zerhacker-Unterbrechers (11) gemäß einem bestimmten zyklischen Verhältnis zu steuern;
wobei jede Zelle außerdem einen einzigen Schutztransistor (13, 23, ..., 63) aufweist, der im zweiten Schaltungszweig angeordnet und einer Schutzverwaltungseinheit (P) zugeordnet ist, um die Zelle (100, 200, ..., 600) unabhängig von den anderen Zellen zu neutralisieren.

2. Wandler nach Anspruch 1, bei dem der Schutztransistor (13, 23 ..., 63) jeder Zelle (100, 200, ..., 600) ein MOS-Transistor ist, der im zweiten Schaltungszweig der Zelle zwischen der Induktanz (14, 24, ..., 64) und der zweiten positiven Anschlussklemme (3) in Reihe geschaltet ist und eine Strukturdiode (20, 30, ..., 70) aufweist, die über ihre Kathode mit der Induktanz (14, 24, ..., 64) und über ihre Anode mit der zweiten positiven Anschlussklemme (3) verbunden ist.

3. Wandler nach Anspruch 1, **dadurch gekennzeichnet, dass** er einen Schutzschafter (801) aufweist, der allen Zellen gemeinsam und einem Bereich des Wandlers zugeordnet ist, der dem einzigen Schutztransistor jeder Zelle entgegengesetzt liegt.

4. Wandler nach Anspruch 1, **dadurch gekennzeichnet, dass** der einzige Schutztransistor (13, 23 ..., 63) jeder Zelle in einen Hochspannungsbereich der Zelle montiert ist.

5. Wandler nach Anspruch 4, bei dem der Schutzschalter (13, 23, ..., 63) ein MOS-Transistor ist, der im zweiten Schaltungszweig direkt neben der ersten positiven Anschlussklemme (1) in Reihe geschaltet ist und eine Strukturdiode (20, 30, ..., 70) aufweist, die über ihre Kathode mit der ersten positiven Anschlussklemme (1) verbunden ist.

6. Wandler nach Anspruch 4, **dadurch gekennzeichnet, dass** er einen Schutzschalter (801) aufweist, der allen Zellen gemeinsam und einem Niederspannungsbereich des Wandlers zugeordnet ist.

## Claims

1. A DC/DC voltage converter comprising:
· a first positive terminal (1) and a first negative terminal (2) for connection respectively to two terminals of a high-voltage electrical network;
· a second positive terminal (3) and a second negative terminal (4) for connection respectively to two terminals of a low-voltage electrical network; and
· n cells (100, 200, ..., 600) connected in parallel, where n is an integer greater than unity, disposed between said first positive and negative terminals (1 and 2) and between said second positive and negative terminals (3 and 4), each cell comprising a chopper DC/DC converter, each having a first circuit branch interconnecting said first and second negative terminals (2 and 4), a second circuit branch including an inductor (14, 24, ..., 64) and interconnecting said first and second positive terminals (1 and 3), chopper means comprising at least one chopper switch (11), and a management unit (C1) adapted to control OFF and ON switching of the chopper switch (11) with a determined duty ratio;
in which each cell further comprises a single protection transistor (13, 23, ..., 63) disposed in said second circuit branch and associated with a protection management unit (P) for taking said cell (100, 200, ..., 600) out of service independently of the other cells.

2. A converter according to claim 1, in which the protection transistor (13, 23, ..., 63) of each cell (100, 200, ..., 600) is a MOS transistor connected in series in said second circuit branch of the cell between the inductor (14, 24, ..., 64) and said second positive terminal (3), and including an intrinsic diode (20, 30, ..., 70) connected to the inductor (14, 24, ..., 64) by its cathode and to said second positive terminal (3) by its anode.

3. A converter according to claim 1, **characterized in that** it includes a protection switch (801) which is common to all of the cells, and which is associated with a portion of the converter that is opposite from the single protection transistor in each cell.

4. A converter according to claim 1, **characterized in that** the single protection transistor (13, 23, ..., 63) in each cell is connected in a high-voltage portion of the cell.

5. A converter according to claim 4, in which the protection transistor (13, 23, ..., 63) is a MOS transistor connected in series in said second circuit branch so as to be immediately adjacent to said first positive terminal (1), and having an intrinsic diode (20, 30, ..., 70) connected to said first positive terminal (1) by its cathode.

6. A converter according to claim 4, **characterized in that** it includes a protection switch (801) which is common to all of the cells and which is associated with a low-voltage portion of the converter.
